# EUROPÄISCHE PATENTANMELDUNG

(11) **EP 0 626 545 A1**
(43) Veröffentlichungstag der Anmeldung: **30.11.1994**
(21) Anmeldenummer: 94108001.2
(22) Anmeldetag: 24.05.1994
(51) Int. Cl.: F24J 2/04, F24J 2/46

(54) **Vorrichtung zur passiven solaren Beheizung von Gebäuden**

(30) Priorität: 28.05.1993 DE 4317858
(71) Anmelder: FRAUNHOFER-GESELLSCHAFT ZUR FÖRDERUNG DER ANGEWANDTEN FORSCHUNG E.V., D-80636 München (DE)
(72) Erfinder: Liersch, Günther F., Dipl.-Ing., D-79117 Freiburg (DE); Wittwer, Volker, Dr., D-79112 Freiburg (DE)

(57) **Zusammenfassung**

Die Erfindung betrifft eine Vorrichtung zur passiven solaren Beheizung von Gebäuden bestehend aus einer transparenten Wärmedämmung (4), Absorber (5),Witterungsschutz (3) und einem Gehäuse (7), wobei die Vorrichtung als geschlossenes Modul ausgebildet ist und, der Absorber (5) an der Wärmedämmung (4) anliegt, zwischen Absorber und zu erwärmender Wand ein Luftspalt (8) vorgesehen ist,und zwei regelbare Lufteintritts- bzw. -austrittsöffnungen (1) im Gehäuse (7) vorgesehen sind.

## Beschreibung

Die Erfindung betrifft eine Vorrichtung zur solaren Beheizung von Gebäuden gemäß dem Oberbegriff des Anspruch 1.

Die bekannten Vorrichtungen haben den Nachteil, daß sie meistens komplizierte Regelungssysteme zur Abschattung der Vorrichtung benötigen. Oft funktionieren diese Systeme nicht, weil sie zu spät den Wärmetransport ins Innere des Gebäudes verhindern und sich das Innere nach getätigter Abschaffung infolge der vorhandenen Wärmekapazität in der Gebäudewand weiter aufwärmt.

Der Erfindung liegt die Aufgabe zugrunde, eine Vorrichtung der eingangs genannten Art zu schaffen, welche ein bedarfsgerechtes Steuern von Solarwärme, insbesondere bei hohem Überangebot während der Sommermonate, erlaubt, ohne daß bewegliche Teile innerhalb oder außerhalb der Fassade nötig sind und ohne den thermischen Komfort im Gebäudeinneren durch Überhitzung zu verschlechtern.

Erfindungsgemäß wird diese Aufgabe durch Anspruch 1 gelöst, vorteilhafte Ausgestaltungen sind in den Unteransprüchen gekennzeichnet.

In der Vorrichtung trifft die Solarstrahlung durch ein lichtdurchlässiges aber wärmedämmendes Material 4 auf einen Metallblechabsorber 5, welcher sich aufgrund des hohen thermischen Widerstandes des transparenten Dämmaterials 4 auf Temperaturen bis 100° aufheizt. Ein Großteil der absorbierten Wärme wird von der Rückseite über freie Luftkonvektion und IR-Strahlung an die Hauswand 6 übertragen. Da die Vorrichtung ein geschlossenes System bildet, werden thermische Verluste reduziert und die solaren Gewinne in das Gebäudeinnere eingespeist.

Durch die räumliche Trennung des Moduls mit dem Solarabsorber 5 von der Hauswand 6, wodurch ein Hinterlüftungsspalt 8 von geeigneter Dicke D (von z.B. 3 - 10 cm), gebildet wird, wird erreicht, daß der Wärmetransport wirkungsvoll und ohne komplizierte Einrichtungen geregelt werden kann. Die Spaltbegrenzungsoberflächen Hauswand und Rückseite des transparenten Dämmoduls sind mit geeigneten IR-Emisssivitäten ε versehen, so daß Wärme bei geschlossenem Hinterlüftungsspalt 8 mittels IR-Strahlung und natürlicher Luftkonvektion durch die Luftschicht an die Hauswand transportiert wird. Dieser Wärmetransport wird durch den hohen thermischen Widerstand des Wärmedämmaterials und der geschlossenen Ausführung der Vorrichtung als Modul in ausreichendem Maße gewährleistet. Die Steuerung des solaren Wärmestroms geschieht über Luftklappen oder Lüftungsschlitze 1 am unteren und oberen Ende der Fassade. Bei Öffnung des Hinterlüftungsspaltes 8 leitet eine Konvektionsströmung die Überschußwärme aus dem Spalt an die Umgebung ab. Dabei wird auch die Hauswand, die vorher erhitzt war, ebenfalls abgekühlt. Durch den sehr hohen Temperaturunterschied zwischen dem Absorber und der Umgebungsluft stellt sich diese Konvektionsströmung sehr schnell ein und der vorher vorhandene Wärmestrom vom Absorber zur Hauswand wird effektiv unterbunden. Durch eine strömungsgünstige Ausbildung des Luftspalts ist die Konvektionsströmung dadurch ausgezeichnet, daß
1. eine eng an den Absorber anliegende thermische Grenzschicht entsteht und keine Wärme mehr über Konvektion an die Hauswand übertragen wird,
2. und der sich ausbildende Luftstrom den größten Teil der dennoch über IR-Strahlung an die Hauswand übertragenen Wärme dort in einer Mischform von freier und erzwungener konvektiver Wärmeübertragung aufnimmt und ebenfalls an die Umgebung abführt.

Die Regelung der Luftklappen 1 kann im einfachsten Fall durch manuelles Betätigen der Klappen erfolgen oder durch automatische Steuerung wie Bimetallhebel oder elektrisch über einen Temperaturregler im Inneren des Gebäudes, der magnetisch, elektrisch oder mechanisch die Luftklappe steuert.

Wesentlicher Bestandteil der Erfindung ist dabei der modulare Aufbau des eigentlichen transparent gedämmten Wandkollektors. Dabei bilden das transparente Dämmaterial 4, Absorber 5, Witterungsschutz 3 eine dicht abgeschlossene modulare Einheit, wobei das transparente Wärmedämmaterial direkt an dem Absorber 5 und der Abdeckscheibe 3 anliegt, um interne Luftkonvektion zu vermeiden.

### Ausführungsbeispiele:

Bei einer ersten Variante steht die Luft in dem Modul ausschließlich über einen thermisch an den Absorber 5 angekoppelten Behälter mit Trockenmittel 2 von ausreichender Menge mit der Umgebungsluft in Verbindung. Der Behälter 2 befindet sich auf der Rückseite des Absorbers 5 und wird somit von diesem aufgeheizt und dadurch auch das Trockenmittel, so daß dieses oberhalb seiner Desorptionstemperatur aufgeheizt wird und somit der bei der Abkühlung in das Modul zurückströmenden Luft die vorhandene Luftfeuchtigkeit entziehen kann. Die gleichzeitige Expansion der Luft in dem Dämmodul in der Heizperiode mit der dadurch erzwungenen Austrittsströmung durch das Trockenmittel, bewirkt die Desorption, also die Regeneration des Trockenmittels. Bei der Abkühlung des Moduls mit der damit verbundenen thermischen Kompression der eingeschlossenen Luft, strömt dann die Umgebungsluft durch das Trockenmittel in das Modul. Als Trockenmittel kann z.B. Silikagel vorgesehen sein. Das ausgetauschte Luftvolumen beträgt bei einem Modul der Abmessungen 2 x 1 x 0,06 m³ ca. 30 l.

Bei einer zweiten Variante wird ein luftdichter Randverbund des Moduls 3, 4, 5 benötigt. Der Luftdruck in dem Modul wird soweit verringert, daß bei der thermischen Expansion der Luft bei Aufheizung des Absorbers und damit bei einer Arbeitstemperatur von etwa 100° gerade noch kein Überdruck relativ zur Umgebung in dem Modul herrscht. Bei kaltem Modul kann der Unterdruck etwa 800 hPa betragen. Dabei wird der auf der Abdeckung lastende Überdruck von der Struktur des transparenten Dämmaterials und dem Gehäuse des Moduls aufgenommen. Ein wesentlicher Fortschritt der Erfindung gegenüber bisherigen transparenten Dämmkonstruktionen ist dadurch gegeben, daß Verstaubungs- und Feuchtigkeitsprobleme effektiv vermieden werden. Insbesondere die problematische Kondensation von Feuchtigkeit an der Abdeckscheibe während kalter Nächte und die damit verbundene Verringerung der solaren Transmission des Materials, kann durch die Erfindung verhindert werden. Dadurch wird auch der Gesamteindruck der Fassade durch die Kondensation nicht gestört und es tritt keine Wirkungsgradverschlechterung ein.

Die Regeneration des Trockenmittels erfolgt schon bei niedrigen solaren Einstrahlungswerten, da sich der Absorber selbst dann auf über 80° aufheizt.

Die Emissivität des Absorbers, der z.B. aus Aluminium bestehen kann, beträgt bei blauem Aluminium 10% und bei oxydiertem Aluminium ca. 20% im Infraroten. Die normalen Hauswände weisen eine hohe Emissivität für Infrarot auf, die Absorption ist ebenfalls im Normalfall sehr gut, die Hauswand muß nicht schwarz gestrichen sein.

Durch die Erfindung wird auch erreicht, daß der K-Wert der Wand durch die Wärmedämmung sowie den Hinterlüftungsspalt wesentlich verbessert wird.

Bei der Konvektion bilden sich an Wand und Absorber getrennte Grenzschichten mit turbulenten Anteilen aus. Bei geschlossenen Lufteintritts- bzw. austrittsöffnungen 1 bildet sich dann die konvektive Luftströmung zwischen diesen Grenzschichten aus. Als Hinterlüftungsspaltdicke D genügen 3 - 10 cm.

Es kann vorteilhaft sein, in den oberen und unteren Kanten der Vorrichtung, die durch Gehäuse 7 und Wand 9 gebildet werden, Führungsbleche 10 für die Luftzirkulation vorzusehen, da dann die Luftzirkulation bei offenem Luftein- bzw. austritt 1 verbessert wird.

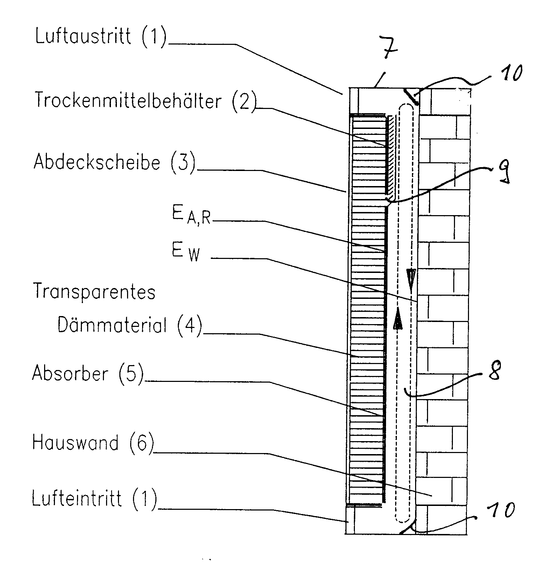

## Patentansprüche

1. Vorrichtung zur passiven solaren Beheizung von Gebäuden bestehend aus einer transparenten Wärmedämmung (4), Absorber (5),Witterungsschutz (3) und einem Gehäuse (7),
**dadurch gekennzeichnet**,
daß die Vorrichtung (3, 4, 5) als geschlossenes Modul ausgebildet ist, der Absorber (5) an der Wärmedämmung (4) anliegt,
und die Vorrichtung (3, 4, 5) bzw. Modul in einem Gehäuse (7) derart angeordnet ist, daß zwischen Absorber und zu erwärmender Hauswand (6) ein Luftspalt (8) vorgesehen ist und
zwei regelbare Lufteintritts- bzw. -austrittsöffnungen (1) im Gehäuse (7) vorgesehen sind.

2. Vorrichtung nach Anspruch 1,
**dadurch gekennzeichnet**,
daß die Seitenkanten des Gehäuses (7) derart bemessen sind, daß bei Anbringen des Gehäuses auf eine Hauswand (6) der Luftspalt (8) in der gewünschten Schichtdicke D gebildet wird.

3. Vorrichtung nach Anspruch 1 - 2,
**dadurch gekennzeichnet**,
daß auf der Rückseite des Absorbers (5) ein Behälter (2) mit Trockenmittel angeordnet ist, der einerseits mit der Luft in dem Modul über eine oder mehrere Öffnungen (9) im Absorber (5) und andererseits mit dem Luftspalt (8) in Verbindung steht.

4. Vorrichtung nach Anspruch 1,
**dadurch gekennzeichnet**,
daß das Modul luftdicht ausgebildet ist und bei kaltem Modul ein verringerter Luftdruck im Innern vorgesehen ist.
